# EUROPÄISCHE PATENTANMELDUNG

(11) **EP 0 525 320 A1**
(43) Veröffentlichungstag der Anmeldung: **03.02.1993**
(21) Anmeldenummer: 92108606.2
(22) Anmeldetag: 21.05.1992
(51) Int. Cl.: G05G 5/05, F16K 31/04

(54) **Rückstellvorrichtung eines elektromagnetisch betätigbaren Schaltgliedes in die Ruhestellung**

(30) Priorität: 20.07.1991 DE 4124125
(71) Anmelder: Licentia Patent-Verwaltungs-GmbH, D-60596 Frankfurt (DE)
(72) Erfinder: Traeger, Friedrich, W-1000 Berlin 27 (DE)
(74) Vertreter: Vogl, Leo, Dipl.-Ing.

(57) **Zusammenfassung**

Bei elektromagnetisch betätigbaren Schaltgliedem ist bei Unterbrechung der Versorgungsspannung eine automatische Rückstellung dieser Schaltglieder in die Ruheposition erforderlich. Dieses wird erfindungsgemäß mit einfachsten Mitteln dadurch erreicht, daß das Schaltglied eine Steuerwelle (1) ist, die mit einem antreibbaren Zahnrad (3) fest verbunden und gegen die Rückstellkraft einer mit frei abstehenden Schenkeln (5, 7) versehenen Drehfeder (9) aus der mittleren Ruhelage verschwenkbar ist, wobei für jeden Schenkel (5, 7) ein ortsfester Anfangsanschlag zur Festlegung der Schenkelstellung in der Ruhelage vorgesehen ist. Das Zahnrad (3) weist außerdem einen Mitnehmer auf, durch den je nach Drehrichtung des Zahnrades (3) einer der beiden Schenkel (5, 7) von dem Anfangsanschlag abhebbar ist. Bei Ausfall der Versorgungsspannung erfolgt eine Rückstellung der Steuerwelle (1) in die Nullposition durch von den Schenkeln (5, 7) der Drehfeder (9) auf den Anschlagstift (17) übertragene Drehmoment. Die Nullposition wird erreicht, wenn die Schenkel (5) oder (7) der Drehfeder (9) wieder an den Anschlagbolzen (11) zur Anlage gelangen.

Bei Unterbrechung der Versorgungsspannung des elektromagnetischen Schaltgliedes z. B. des Schrittmotors (23) wird mit einfachsten Mitteln eine automatische Rückstellung der Schaltglieder in die Nullposition gewährleistet.

## Beschreibung

Die Erfindung betrifft eine automatische Rückstellvorrichtung für ein elektromagnetisch betätigbares Schaltglied in die Ruhestellung bei Unterbrechung der Stromzufuhr der im Oberbegriff des Patentanspruchs 1 angegebenen Art.

Durch die DE 38 21 700 A1 ist eine Steuervorrichtung für mindestens ein Ventil, insbesondere für ein Sitzventil bekannt, dessen Ventilkörper unter Federwirkung in eine Endstellung verlagert wird. Hierbei ist ein Betätigungsglied vorgesehen, an dem der Ventilkörper unter der Federwirkung während des Verstellvorgangs zur Anlage gebracht wird und das mittels eines Schrittmotors verstellbar ist. Das Drehmoment für die Rückstellung der betätigten Glieder wird hierbei durch die Federn im getriebenen System aufgebracht. Deshalb wird durch eine zusätzliche elektromagnetische Kupplung eine Trennung des Systems vom Motor erforderlich. Hierdurch wird die Steuervorrichtung für die Ventile durch die erforderliche Kupplung verteuert. Außerdem entsteht durch Leistungsaufnahme der Kupplung beim Betrieb eine zusätzliche Erwärmung, welche abgeführt werden muß. Weiterhin ist noch ein Sicherheitsrisiko bei Ausfall der Kupplung gegeben.

Der Erfindung liegt die Aufgabe zugrunde, eine Rückstellvorrichtung für ein elektromagnetisch betätigbares Schaltglied, insbesondere zur Steuerung von Ventilen oder Klappen in Kraftfahrzeugen zu schaffen, das einfach aufgebaut und bei Unterbrechung der Spannungsversorgung automatisch in die Nullstellung rückstellbar ist. Weiterhin soll die Rückstellvorrichtung gegenüber dem genannten Stand der Technik vereinfacht werden. Diese Aufgabe wird durch die im Patentanspruch 1 gekennzeichneten Merkmale gelöst.

Die Rückstellvorrichtung benötigt nur wenige Einzelteile, welche leicht herzustellen und zu montieren sind. Zur sicheren Rückstellung der Schaltglieder ist zwischen dem Schrittmotor und dem Reduktionsgetriebe keine Kupplung erforderlich. Bei Unterbrechung der Spannungsversorgung der elektromagnetisch betätigbaren Glieder, z. B. des Schrittmotors, werden die verstellten Glieder automatisch sicher in die Nullstellung zurückgebracht. So kann ein Hydraulikventil bei Ausfall des Bordnetzes in einem Kraftfahrzeug selbsttätig geschlossen werden. Weiterhin kann die Bewegung z. B. eines Kranauslegers unterbrochen und damit Unfälle vermieden werden. Zur Rückstellung der Schaltglieder, wie Ventile oder Klappen ist keine Kupplung erforderlich, wodurch die Vorrichtung vereinfacht und verbilligt wird.

Durch die Ausgestaltung des Erfindungsgegenstandes nach Patentanspruch 4 wird eine genau definierbare Verstellung ermöglicht, da der Schrittmotor digital ansteuerbar und in zwei Richtungen bewegbar ist und ein starkes Haltemoment aufweist.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
Figur 1 eine Seitenansicht auf die Rückstellvorrichtung,
Figur 2 eine Einzelheit aus Figur 1 in perspektivischer Darstellung und
Figur 3 verstellbare Riegelstangen.

In den Figuren ist eine Rückstellvorrichtung für ein durch einen elektromagnetischen Antrieb gegen die Kraft einer Rückstellfeder verstellbares Schaltglied, insbesondere zur Steuerung von Ventilen oder Klappen in Kraftfahrzeugen, das in seinen beiden Endstellungen unterschiedliche Steuersignale erzeugt.

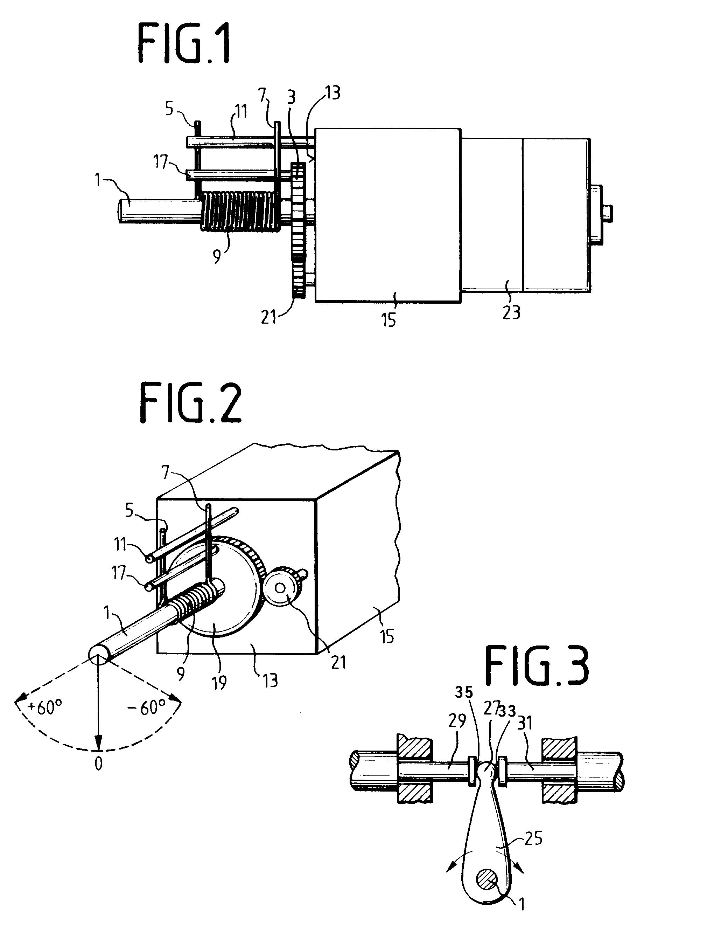

Das Schaltglied besteht aus einer Steuerwelle 1, die mit einem Zahnrad 3 fest verbunden und gegen die Rückstellkraft einer mit frei abstehenden Schenkeln 5, 7 versehenen Drehfeder 9 aus einer mittleren Ruhelage verschwenkbar ist. Diese Drehfeder 9 lagert auf der Steuerwelle 1, wobei für jeden Schenkel 5, 7 ein ortsfester Anfangsanschlag zur Festlegung der Schenkelstellung in der Ruhelage vorgesehen ist. Das Zahnrad 3 weist einen Mitnehmer auf, durch den je nach Drehrichtung des Zahnrades 3 einer der beiden Schenkel 5 oder 7 von dem Anfangsanschlag abhebbar ist. Gemäß den Figuren 1 und 2 besteht dieser Anfangsanschlag aus einem Anschlagbolzen 11, der exzentrisch zu der Steuerwelle 1 an einer Stirnfläche 13 eines Gehäuses 15 für ein Reduktionsgetriebe fest angeordnet ist. Im Rahmen der Erfindung kann die Stirnfläche 13 für jeden Schenkel 5, 7 der Drehfeder 9 auch einen gesonderten Anfangsanschlag aufweisen.

Der Mitnehmer ist ein exzentrisch zu der Steuerwelle 1 an einer Stirnfläche 19 des Zahnrades 3 angeordneter Mitnehmerbolzen 17, durch den je nach der Drehrichtung des Zahnrades 3 einer der beiden Schenkel 5, 7 von dem Anschlagbolzen 11 abhebbar ist. Der Mitnehmerbolzen 17 ist gemäß den Figuren für beide Schenkel 5, 7 gemeinsam vorgesehen, aber es sind auch zwei getrennte Mitnehmerbolzen möglich.

Das Zahnrad 3 steht mit einem Antriebszahnrad 21 des nicht näher dargestellten Reduktionsgetriebes in dem Gehäuse 15 formschlüssig in Eingriff, welches insbesondere als Schnecken-, Stirnrad- oder Planetengetriebe ausgebildet ist. Dieses Reduktionsgetriebe ist über einen Schrittmotor 23 antreibbar, der genaue Verstellungen des Zahnrades 3 und damit der Steuerwelle 1 ermöglicht, da er digital ansteuerbar und in zwei Drehrichtungen bewegbar ist.

Die Steuerwelle 1 hat an ihrem freien Ende einen fest angeordneten Steuerarm 25 mit einem an dessem freien Ende angeordneten kreisförmigen Anschlag 27, über den je nach Schwenkrichtung des Steuerarmes 25 Regelstangen 29, 31 zur Steuerung von Ventilen oder Klappen, insbesondere in Kraftfahrzeugen auf einfachste Weise steuerbar sind. Diese Regelstangen 29, 31 weisen Anschlagflächen 33, 35 auf, die durch den kreisförmigen Anschlag 27 beaufschlagbar sind.

Zum Verstellen der Regelstange 31 muß die Steuerwelle 1 aus der Nullposition gemäß Figur 2 heraus einen Drehwinkel plus 60 Grad ausführen, wobei der Schenkel 7 der Drehfeder 9 durch den an dem Zahnrad 3 befestigten Mitnehmerbolzen 17 mitgenommen wird. Die Abstützung des zweiten Schenkels 5 erfolgt hierbei an dem Anschlagbolzen 11.

Bei Ausfall der Versorgungsspannung an dem Schrittmotor 23 erfolgt eine Rückstellung der Steuerwelle 1 in die Nullposition durch das von dem Schenkel 7 der Drehfeder 9 auf den Anschlagstift 17 übertragene Drehmoment. Die Nullposition wird erreicht, wenn der Schenkel 7 der Drehfeder 9 wieder an dem Anschlagbolzen 11 zur Anlage kommt. Ein gleiches Verhalten wird ebenfalls bei einer Auslenkung der Steuerwelle 1 in Richtung minus 60 Grad erreicht.

Ohne Einsatz einer Kupplung zwischen dem Schrittmotor 23 und dem Reduktionsgetriebe in dem Gehäuse 15 wird sichergestellt, daß die Neutralstellung der Steuerwelle 1 bei Stromausfall sicher und präzise erreicht wird.

Die Rückstellvorrichtung ist nicht nur bei Steuerungen für Ventile oder Klappen in Kraftfahrzeugen, sondern auch zur Steuerung von sonstigen Steuerschaltern einsetzbar.

## Patentansprüche

1. Vorrichtung zur Rückstellung eines durch einen elektromagnetischen Antrieb aus einer Nullstellung heraus nach zwei Richtungen gegen die Kraft einer Rückstellfeder verstellbaren Schaltgliedes, insbesondere zur Steuerung von Ventilen oder Klappen in Kraftfahrzeugen, das in seinen Endstellungen unterschiedliche Steuersignale erzeugt, dadurch gekennzeichnet, daß das Schaltglied eine Steuerwelle (1) ist, die mit einem antreibbaren Zahnrad (3) fest verbunden und gegen die Rückstellkraft einer mit frei abstehenden Schenkeln (5, 7) versehenen Drehfeder (9) aus der mittleren Ruhelage verschwenkbar ist, wobei für jeden Schenkel (5, 7) ein ortsfester Anfangsanschlag zur Festlegung der Schenkelstellung in der Ruhelage vorgesehen ist, und daß das Zahnrad (3) einen Mitnehmer aufweist, durch den je nach Drehrichtung des Zahnrades (3) einer der beiden Schenkel (5, 7) von dem Anfangsanschlag abhebbar ist.

2. Vorrichtung nach Anspruch 1, dadurch gekennzeichnet, daß ein gemeinsamer Anfangsanschlag für beide Schenkel (5, 7) der Drehfeder (9) vorgesehen ist.

3. Vorrichtung nach Anspruch 1 oder 2, dadurch gekennzeichnet, daß ein gemeinsamer Mitnehmer für beide Schenkel (5, 7) der Drehfeder (9) vorgesehen ist.

4. Vorrichtung nach einem der Ansprüche 1, 2 oder 3, dadurch gekennzeichnet, daß das Zahnrad (3) mit einem Abtriebszahnrad (2) eines in einem Gehäuse (15) angeordneten Reduktionsgetriebe formschlüssig in Eingriff steht, und daß das Reduktionsgetriebe über einen Schrittmotor (23) antreibbar ist.

5. Vorrichtung nach einem der vorhergehenden Ansprüche, dadurch gekennzeichnet, daß die Drehfeder (9) auf der Steuerwelle (1) angeordnet ist, und daß der Anfangsanschlag aus einem Anschlagbolzen (11) besteht, welcher exzentrisch zu der Steuerwelle (1) an der Stirnfläche (13) des Getriebegehäuses (15) fest angeordnet ist.

6. Vorrichtung nach Anspruch 5, dadurch gekennzeichnet, daß der Mitnehmer ein exzentrisch zu der Steuerwelle (1) an dem Zahnrad (3) angeordneter Mitnehmerbolzen (17) ist.

7. Vorrichtung nach einem der vorhergehenden Ansprüche, dadurch gekennzeichnet, daß die Steuerwelle (1) an ihrem freien Ende einen Steuerarm (25) aufweist, durch den Regelstangen (29, 31) zur Steuerung von Ventilen oder Klappen in Kraftfahrzeugen verstellbar sind.
